(19) Europäisches Patentamt
European Patent Office
Office européen des brevets

(11) Veröffentlichungsnummer: **0 334 237**
**A1**

(12) # EUROPÄISCHE PATENTANMELDUNG

(21) Anmeldenummer: 89104835.7

(22) Anmeldetag: 17.03.89

(51) Int. Cl.4: H01M 4/96 , C25B 11/12

(30) Priorität: 23.03.88 DE 3809758

(43) Veröffentlichungstag der Anmeldung:
27.09.89 Patentblatt 89/39

(84) Benannte Vertragsstaaten:
AT BE CH DE ES FR GB GR IT LI LU NL SE

(71) Anmelder: Schuster, Dietrich, Dr.
Am Käfernberg 7
D-6741 Frankweiler / Pfalz(DE)

(72) Erfinder: Schuster, Dietrich, Dr.
Am Käfernberg 7
D-6741 Frankweiler / Pfalz(DE)

(74) Vertreter: Ratzel, Gerhard, Dr.
Seckenheimer Strasse 36a
D-6800 Mannheim 1(DE)

(54) **Verfahren zur Herstellung von Kohlenstoff enthaltenden Elektroden für stromerzeugende und/oder stromspeichernde Zellen.**

(57) Die Erfindung betrifft ein Verfahren zur Herstellung von Kohlenstoff enthaltenden Elektroden für stromerzeugende und/oder stromspeichernde Zellen, das dadurch gekennzeichnet ist, daß man kohlenstoffhaltiges Material mit Vinylpolymer enthaltendem Material vermischt und sodann die entstandene Mischung auf eine solche Temperatur erhitzt und/oder vorher, gleichzeitig oder anschließend, einem solchen Druck aussetzt, bei dem bzw. denen mindestens eine chemische Veränderung (stoffliche Veränderung) des Vinylpolymers eintritt.

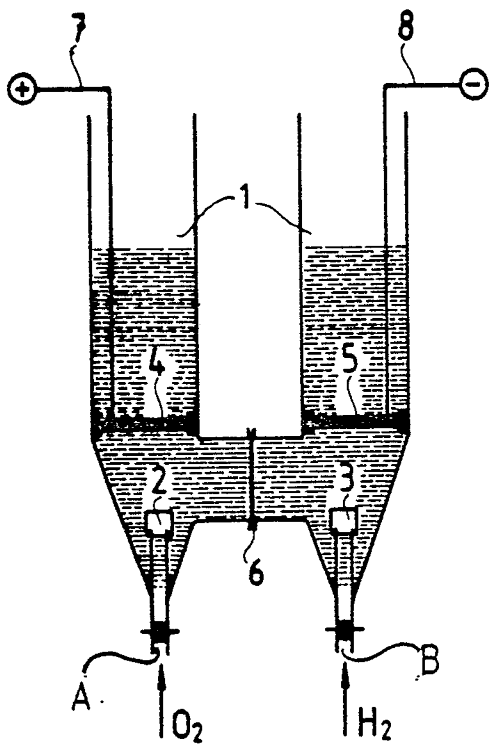


Fig.1

EP 0 334 237 A1

Xerox Copy Centre

# Verfahren zur Herstellung von Kohlenstoff enthaltenden Elektroden für stromerzeugende und/oder stromspeichernde Zellen

Die vorliegende Erfindung betrifft ein Verfahren zur Herstellung von kohlenstoffenthaltenden Elektroden für stromerzeugende und/oder stromspeichernde Zellen sowie deren Anwendung.

In jüngster Zeit haben die Bemühungen zugenommen, organische Polymere herzustellen, die als sogenannte intrinsisch leitende Kunststoffe auch in der Elektrochemie für Elektrodenmaterial eingesetzt werden können.

Diesen Bestrebungen kommt auch deshalb eine große Bedeutung zu, weil die bisher zum Einsatz gelangenden metallischen bzw. metallhaltigen Elektroden, insbesondere die giftigen Schwermetall-Elektroden, sei es in Form ihrer Verwendung in Primär- oder Sekundär-Zellen bei der Herstellung, sei es bei deren Vernichtung oder Rezyklisierung, jeweils sehr große Umweltprobleme aufwerfen, da die Inhaltsstoffe dieser Schwermetall-Elektroden, insbesondere die sehr giftigen Metalle Cadmium, Nickel, Kupfer, Blei und Quecksilber, unvermeidbar mehr oder weniger in das Erdreich, das Grundwasser und die Luft gelangen und diese mit Giftstoffen belasten.

Ein weiterer Nachteil der Schwermetall-Elektroden beruht auf den hohen spezifischen Gewichten ihrer metallischen Inhaltsstoffe, was für die Anwendung der Schwermetall-Elektroden bzw. Metallelektroden in Traktionszellen und auch beim Bestreben, eine kostengünstige Speicherung photovoltaisch gewonnener Solarenergie zu erreichen, fas unüberwindliche Schwierigkeiten bedeutet.

Die eingangs genannten intrinsisch leitfähigen Kunststoffe sind dagegen spezifisch leicht und umweltfreundlicher, so daß sich viele Hoffnungen an sie geknüpft haben.

In ihrem Aufbau folgen Sie, strukturchemisch betrachtet, alle dem gleichen Prinzip, Polymere mit konjugierten Doppelbindungssystemen zu sein. Hierzu gehören beispielsweise das Polyacetylen, Polyphenylen, Polypyrrol, Polyanilin uzw. .

In reinem Zustand allerdings sind auch diese Stoffe noch keine Leiter; vielmehr muß man sie dotieren, um sie zu Leitern zu machen, d.h. man muß geladene Ionen an die $(CH)_X$-Kette heranbringen, wobei insbesondere Jod, $FeCl_3$, $AsF_5$ u.a. eine Rolle spielen. Durch diese Dotierung werden entweder Ladungen von der Kette abgezogen oder Ladungen auf die Kette aufgebracht, so daß eine Ionenleitfähigkeit entsteht, die den Stromtransport übernimmt.

Einen anderen Weg der Entwicklung beschreiten die sogenannten Komposit-Elektroden, die durch Compoundieren (Vermengen) eines nichtleitenden, organischen Thermoplasten mit einem leitenden Kohlenstoffmaterial wie Ruß und/oder Graphit und/oder Kohlenstoffasern gewonnen werden. Hier dient der organische Thermoplast als Matrix für einen Leiter und die Komposit-Elektrode nimmt dan oberhalb eines bestimmten Prozentgehalts an Leiter Ruß und/oder Graphit , also oberhalb des sogenannten Perkolationspunktes, elektrisch leitende Eigenschaften an.

Kombiniert man eine solche Komposit-Elektrode noch zusätzlich mit Metallen und/oder Metalloxiden, die ein chemisches Redoxpotential besitzen, so lassen sich Primär- und Sekundär-Zellen oder Zellen mit kombinierten Eigenschaften aufbauen. In diesem Zusammenhang wird auf die DE-OS 36 18 881 verwiesen.

Mit vorliegender Erfindung wird dagegen in völligem Gegensatz zum vorgenannten Stand der Technik, ein von den bisher beschriebenen und beschrittenen Wegen, organisches Elektrodenmaterial herzustellen, völlig abweichender Weg geschaffen, der sich grundsätzlich und wesentlich von den beschriebenen Wegen des Standes der Technik unterscheidet; während nämlich der Aufbau intrinsisch leitender Polymere stets von Monomeren ausgeht und am Ende zu einem intrinsisch leitenden Polymeren führt, ohne daß, wie beschrieben, ein Leiter wie Ruß, Graphit oder Silberoxyd mit einem polymeren Nichtleiter kombiniert wird, gelingt hier eine völlig unerwartete und neuartige Verbindung zwischen zwei Nichtleitern zu einem Leiter dadurch, daß der Nichtleiter Aktivkohle mit dem nichtleitenden Vinylpolymeren verbunden wird, wobei durch Druck- und Temperatureinwirkung beide Stoffe so ineinander umgewandelt und/oder miteinander ausgerichtet werden, daß ein neues organisches Leitungssystem entsteht. Dieser erste wesentliche Effekt wird noch durch einen zweiten Effekt erweitert, daß nämlich das entstandene Leitungssystem in einem zweiten Verfahrensschritt durch Oxydation mittels Sauerstoff und/oder durch Reduktion mittels Wasserstoff ebenfalls völlig unerwartet und überraschend, dieses Leitungssystem zu einem reversiblen Träger eines elektrochemischen nutzbaren Redoxprozesses gemacht werden kann.

Damit ist es erstmals auf einem völlig neuen Wege möglich geworden, ein organisches Elektrodenmaterial zu schaffen, das leitende und reversible Redoxeigenschaften gleichzeitig miteinander verbindet, so daß völlig oder weitgehend metallfreie und/oder metalloxydfreie Elektroden daraus hergestellt werden können.

Weitere Einzelheiten sind in den Unteransprüchen geoffenbart.

Die Erfindung betrifft ferner ein Verfahren zu Herstellung sowie der Anwendung dieses organischen Elektrodenmaterials, wie dies in den beiliegenden Ansprüchen im einzelnen dargelegt ist.

Zum wahrscheinlichen, theoretischen Hintergrund der Erfindung sei noch folgendes ausgeführt:

Die Aktivkohle kann als anisotroper Festkörper aufgefaßt werden, in dem das Kohlenstoffrumpfgerüst der organischen Polymeren (Holz, Zellulose), aus denen sie entstanden ist, noch teilweise erhalten ist, wobei kristalline Zonen mit der Struktur des Schichtgitters von Graphit abwechselnd mit amorphen Zonen, in statistischer Verteilung vorliegen.

Diese amorphen Zonen, in denen viele Leerstellen und Störstellen die Ausbildung eines Gitters verhindern, sind ja der Grund, weshalb Aktivkohle ein Nichtleiter ist, da in diesen amorphen Zonen weder ein Valenz-noch ein Leitungsband zur Verfügung steht. Lediglich innerhalb der Schichtgitterstruktur des Graphits ist dies der Fall, denn für eine Diamantstruktur ist ein Übergang von Elektronen vom Valenzband in ein Leitungsband ausgeschlossen. Außerdem sind in der Aktivkohle, vor allen Dingen in den äußeren Zonen, noch sehr viele Sauerstoffatome an- und eingelagert, die als Störstellen wirken und eine Weitergabe von Landungen blockieren, sodaß insgesamt Aktivkohle, wie schon gesagt, ein Nichtleiter für den elektrischen Strom ist:

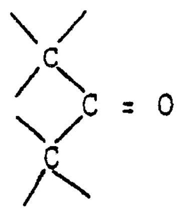

Gerade diese zuletzt genannten Störstellen und Leerstellen der Aktivkohle sind aber auch die,die Aktivkohle zu einer so wertvollen Substanz machen, da hier eine hohe Reaktionsenthalpie sozusagen eingefroren ist, vor allen Dingen dort, wo noch reaktionsfähige Sauerstoffatome vorhanden sind.

Bringt man nun unter den Bedingungen, wie sie hier beschrieben worden sind, also unter hohem Druck und hoher Temperatur, eine Polyvinylkette an eine solche Sauerstoffstörstelle, so kommt es zu einer chemischen Reaktion mit der Polyvinylkette und der Oberfläche der Aktivkohle, wobei Wasser abgespalten wird und die Kette angelagert wird, wie im folgenden dargestellt ist.

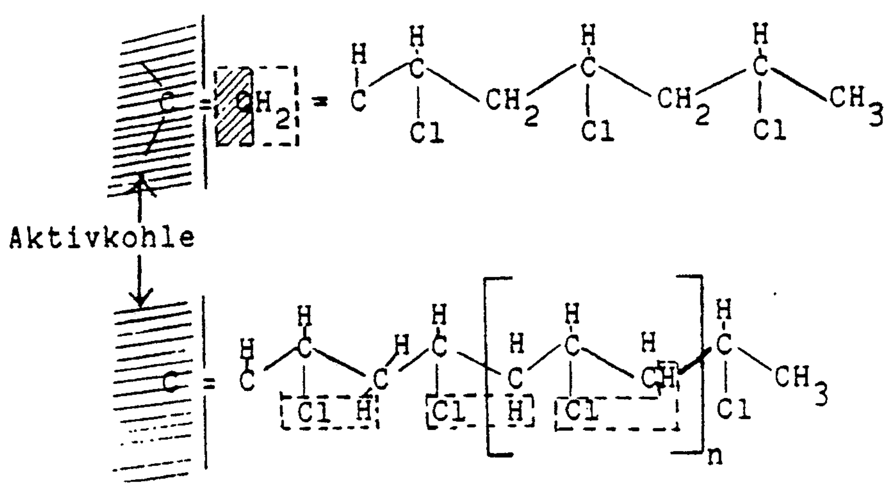


Gleichzeitig kommt es damit auch zu einer Destabilisierung der Polyvinylkette, die nunmehr spontan Chlorwasserstoff abspaltet und sich unter Ausbildung eines alternierenden Systems von Doppelbindungen stabilisiert, wie dies formal in der folgenden Formel dargestellt ist.

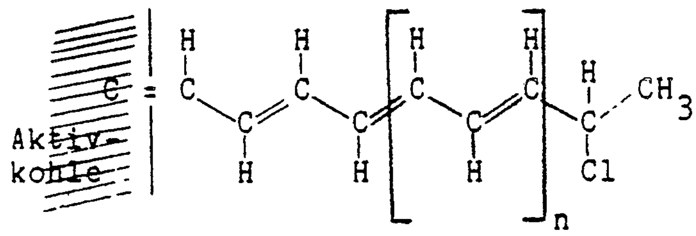

$+nHCl$

Die Polyvinyl-Rumpf-Kette ist dann (teilsweise) identisch mit einer Kette, wie sie sich bei der oxidativen Polymerisation von Acetylen ergibt. Diese Polyvinylkette kann natürlich noch Halogen und/oder andere aktive Gruppen enthalten.

Aber auch die Aktivkohle selbst wird durch den ganzen Vorgang verändert, da jetzt Gitterleerstellen und Fehlstellen verschwinden, bzw. in kristalline Zonen mit einem Schichtgitter umgewandelt werden.

Mit anderen Worten: Aus dem instabilen Bereich der amorphen, mit Sauerstoff angereicherten Zone der Aktivkohle, die eine Leitung verhindert, kommt es durch Anlagerung an eine Polyvinylkette zur Ausbildung einer stabilen, kristallinen Schichtgitterzone in der Aktivkohle, die mit einer stabilen Kette von alternierenden Doppelbindungen verknüpft ist, welche ihrerseits noch aktive Reste, wie Halogen, OH-Gruppen, etc. enthalten.

Es ist eine neue Struktur mit einem Zwittersystem eines Leitungsmechanismus entstanden, nämlich von Elektronenleitung innerhalb des Schichtgitters und von Ionenleitung innerhalb der Kette. Werden nämlich von einem dieser Reste, z.B. Halogen, Elektronen abgezogen, so werden auch Elektronen aus der Kette abgezogen und schließlich auch aus dem Valenzband des mit der Kette verbundenen Kohlenstoff-Graphitgitters.

Es ist dies eine positive Defektleitung, die auch als elektronischer Halbleiter, als i-Halbleiter (intrinsic semiconductor) bezeichnet wird.

Selbstverständlich ist auch das Umgekehrte möglich, nämlich das Aufbringen von Elektronen auf die Kette, sodaß eine Überschuß-Leitung entsteht.

Das Funktionsprinzip dieser Erfindung liegt also in der völlig unerwarteten Möglichkeit, aus zwei Nichtleitern, Aktivkohle und Polyvinylverbindung, durch Vereinigung miteinander eine Überstruktur aufzubauen, die die Eigenschaften eines intrinsischen Halbleiters, verbunden mit einem elektronischen Leiter hat. Dadurch entstehen völlig neue Möglichkeiten der zukünftigen Anwendung dieser Erfindung.

Die vorliegende Erfindung ist in den beiliegenden Ansprüchen 1 bis 22 weiterhin geoffenbart.

Das Wesen vorliegenden Erfindung wird anhand der folgenden Ausführungsbeispiele, die bevorzugte Ausführungsformen darstellen, weiterhin erläutert.

Beispiel 1:

Beschreibung des ersten Verfahrensschrittes:

Hauptbestandteil 1 und Hauptbestandteil 2:

3,0 g Aktivkohle pflanzlicher oder tierischer Herkunft, mit einer Teilchengröße von z.B. 0,1 bis 10$\mu$ und/oder 1 - 400 mesh mit einem Porenvolumen z.B. von 0,1 bis 3 $cm^3$/g und mit einer aktiven Oberfläche von 100 bis 1600 $m^2$/g,werden mit 16 g einer 7,5%igen Lösung von Polyvinylchlorid in Tetrahydrofuran zu einem Brei ver rührt, der anschließend, innerhalb eines Zeitraumes von 14 Stunden zur völligen Trockenheit bei einer Temperatur von 20° bis 40° eingedampft wird.

Die Trockenmasse wird in einem Turbomischer zerkleinert und dann 2,1 g der Mischung in einer Metallform gleichmäßig verteilt und mit einem Druck von 200 bar bei 150° C 30 Minuten gepreßt.
Man gewinnt auf diese Weise zwei harte, spröde Elektroden, die einen spezifischen Oberflächenwiderstand von 27 Ohm•cm haben.

Dies beiden Elektroden baut man nun in die Apparatur ein, die in Figur 1 dargestellt ist. Diese Apparatur beinhaltet das Gefäß 1, die Fritten 2 und 3, die Elektroden 4 und 5, die ionensemipermeable Wand 6 aus perfluoriertem kationischem Ionenaustauscher und die Ableitung 7 und 8.

Diese Apparatur ist nach dem Ersatzschaltbild gemäß Figur 2, mit einem Voltmeter und einer

Konstantstromquelle 1 verbunden.

Zur weiteren Erläuterung der Figur 2 wird festgestellt, daß die Elektrolyt-Apparatur auf der linken Seite der Figur 2 identisch ist mit der Apparatur gemäß Figur 1.

In dieser Apparatur gemäß Figur 1 befindet sich als Elektrolyt im Anodenraum 2n KCL- oder 2n KBr- oder 2n KJ-Lösung, im Kathodenraum 2n KOH Lösung. Der Schalter 2 ist geöffnet.

Nach dem Einbau der Elektroden ist am Voltmeter zunächst keine Spannung vorhanden. Diese tritt jedoch sofort auf, wenn man die Hähne 9 und 10 öffnet und Sauerstoff und/oder Luft bei A und Wasserstoff bei B einströmen läßt. Die Spannung steigt schnell auf $U_0$ von 1,1 Volt. Über einen Arbeitswiderstand von 2 Ohm läßt man den gewonnenen Strom abfließen und polarisiert so die Elektroden etwa 5 Minuten bis 120 Minuten. Sodann schaltet man die Wasserstoffzufuhr ab und läßt von der Konstantstromquelle C einen Strom von 0,1 mA bis 30 mA in die Elektroden 1 -120 Minuten lang fließen. Diesen Vorgang kann man mehrmals wiederholen.

In Figur 3 ist die Pressform dargestellt.Mit dem Bezugszeichen 9 ist die Basis der Pressform, mit 10 ein aufgelegter Bemessungsring und mit 11 der Press-Stempel bezeichnet. In der Presszone 12 erfolgt die Pressung.

Diese Elektroden sind nun geeignet, als Elektroden für eine stromerzeugende oder stromspeichernde Zelle zu dienen.

Beispiel 2:

Haupt- und ein Nebenbestandteil:

3,0 g Aktivkohle der Spezifikationen gemäß Beispiel 1, 1,2 g einer 7,5%igen Polyvinylchlorid-Lösung in Tetrahydrofuran, 1,0 g Kohlefasern einer Länge von 1 - 5 mm und einer Dicke von 0,01 bis 0,05 mm, werden zu einem Brei verrührt, der innerhalb von 12 Stunden bei 40° C getrocknet wird.

Das Trockenmaterial wird 1 Minute in einem Turbomischer zerkleinert und dann zu zwei Elektroden von je 2,7 g in einer Form bei 120° C 40 Minuten bei 200 bar verpresst. Die Presslinge werden ebenso wie in Beispiel 1 beschrieben behandelt und sind dann als metallfreie organische Elektroden für Brennstoffzellen, Batterien und/oder Speichenzellen anzuwenden.

Beispiel 3

Hauptbestandteile und zweiter und dritter Nebenbestandteil:

1,5 g Aktivkohle wie in Beispiel 1, 0,5 g Graphit, 0,5 g von 60 % Ruß in 40% Polyvinylchlorid extrudiert, 1,6 g Polyvinylchlorid 7,5 %ig in Tetrahydrofuran.

Beispiel 4:

Hauptbestandteile mit Polyvinylalkohol-Variante:

3,0 g Aktivkohle wie in Beispiel 1 werden mit 16,0 g Polyvinylchlorid 7,5% ig in Tetrahydrofuran gemischt und der Brei innerhalb von 12 Stunden bei 30° C getrocknet. Die Trockensubstanz wird gemahlen und mit einer Mischung von 1 g Polyvinylalkohol und 1 g Polyvinylacetat in 10 g Lösungsmittel Methanol zusammengeknetet und das Gemisch bei 80° C in Vakuum getrocknet.

Das Trockenmaterial wird wieder gemahlen und daraus zwei gleichschwere Elektroden hergestellt und zwar durch Verpressen in einer Form bei 160° C 40 Minuten lang bei einem Druck von 100 bar. Das entstandene Elektroden-material hat einen Oberflächenwiderstand von 0,5 Ohm • cm.

Anschließend werden die Presslinge ebenso wie in Beispiel 1 beschrieben behandelt und sind dann als metallfreie organische Elektroden in stromerzeugenden und stromspeichernden Zellen anzuwenden.

Beispiel 5:

Es wird das Beispiel 1 wiederholt, mit der Abänderung, daß diesmal statt 3,0 g Aktivkohle 3,0 g Platinaktivkohle mit einem Gehalt von 2 % Platin oder 3,0 g Palladiumaktivkohle mit einem Gehalt von 2 % Palladium (Gew.-%) eingesetzt werden.

Alle gewonnen Elektroden haben folgende Größen: 50 mm ⌀, 2-3 mm Dicke. Dies ergibt sich aus der verwendeten Metallform.

Beispiel 6

| | |
|---|---|
| 9 g | Aktivkohle Norit A |
| 1 g | Graphit synthetisch |
| 1,9 g | PVC niedermolekular |
| 8,1 g | PVC hochmolekular |
| 1,6 g | PVC sehr hochmolekular |
| 1,6 g | Molybdäntrioxid |

werden in einer Kugelmühle 24 Stunden gemahlen. Danach kommen für jede Elektrode 4,050 g in die beschriebene Form und werden darin durch Rütteln gleichmäßig verteilt und werden in dieser Form einem Druck von 250 bar ausgesetzt, über einen Zeitraum von 2 Stunden, bei 200 °C.

Danach wird durch Rückwägung ein Thermolyseverlust von 300 mg für jede Elektrode ermittelt.

Die Presslinge haben dann einen spezifischen Durchgangswiderstand von 3,2 •cm. Sie werden in die Versuchszelle der Figur 1 eingebaut und haben nach einer Aufladungszeit von 12 Stunden mit einem Konstantstrom von 50 milli Ampere eine Kapazität von 48 milli Ampere Stunden.

Beispiel 7:

| | |
|---|---|
| 12 g | Aktivkohle Norit A |
| 8 g | PVC hochmolekular |
| 8 g | Polyvinylpyridin quervernetzt |
| 4 g | Graphit synthetisch |
| 1 g | $Ag_2O$ |

werden 14 Stunden in einer Kugelmühle gemahlen. Danach kommen je 3,00 g in die Form von Figur 3 und werden dort durch Rütteln gleichmäßig verteilt und werden dann in der Form einem Druck von 500 bar,bei einer Temperatur von 250 °C, 30 Minuten ausgesetzt. Der Thermolyseverlust beträgt dann 400 mg für jede Elektrode; diese haben einen spezifischen Durchgangswiderstand von 2,6 •cm. Sie werden in der Versuchszelle gemäß Figur 1 eingebaut und haben nach einer Aufladung von 12 Stunden, mit einem Konstantstrom von 50 milli Ampere eine Kapazität von 50 milli Ampere Stunde.

Beispiel 8:

| | |
|---|---|
| 12 g | Aktivkohle Norit A |
| 8 g | PVC hochmolekular |
| 4 g | PVC niedermolekular |
| 4 g | Polyvinylalkohol |
| 4 g | Graphit |
| 2 g | Anilin |

werden 14 Stunden in einer Kugelmühle gemahlen. Danach kommen je 2,4 g in die in Figur 3 beschriebene Form und werden dann darin bei einer Temperatur von 200 °C einem Druck von 1000 bar 2 Stunden lang ausgesetzt. Danach beträgt der Thermolyseverlust 600 mg. Die Presslinge haben dann einen spezifischen Durchgangswiderstand von 1,8 •cm. Sie werden in die Versuchszelle der Figur 1 eingebaut und haben nach einer Aufladungszeit von 12 Stunden mit einem Konstantstrom von 50 milli Ampere eine Kapazität von 48 milli Ampere Stunden.

Beispiel 9:

| | |
|---|---|
| 12 g | Aktivkohle |
| 12 g | PVC sehr hochmolekular |
| 2 g | Polyvinylacetat |
| 4 g | Graphit |
| 1 g | Ni-Pulver |
| 2 g | PVC niedermolekular |

werden 12 Stunden in einer Kugelmühle gemahlen. Danach kommen je 2,2 g in die in Figur 3 beschriebene Form und werden darin einem Druck von 250 bar über einen Zeitraum von 2 Stunden und 15 Minuten ausgesetzt.Der Thermolyseverlust beträgt 200 mg. Die Presslinge haben dann einen spezifischen Durchgangswiderstand von 4,6 •cm. Sie werden dann in die Versuchszelle der Figur 1 eingesetzt und haben nach einer Aufladungszeit von 12 Stunden mit eijnem Konstantstrom von 50 milli Ampere eine Kapazität von 40 milli Ampere Stunden.

**Ansprüche**

1. Verfahren zur Herstellung von Kohlenstoff enthaltenden Elektroden für stromerzeugende und/oder stromspeichernde Zellen,
dadurch gekennzeichnet,
daß man kohlenstoffhaltiges Material mit Vinylpolymer enthaltendem Material vermischt und sodann die entstandene Mischung auf eine solche Temperatur erhitzt und/oder vorher, gleichzeitig oder anschließend, einem solchen Druck aussetzt, bei dem bzw. denen mindestens eine chemische Veränderung (= stoffliche Veränderung) des Vinylpolymers eintritt.

2. Verfahren nach Anspruch 1,
dadurch gekennzeichnet,
daß man das entstandene Produkt in eine Raumform überführt.

3. Verfahren nach Anspruch 2,
dadurch gekennzeichnet,
daß man das entstandene Produkt durch Verpressung in eine Raumform überführt.

4. Verfahren nach Anspruch 2-3,
dadurch gekennzeichnet,
daß man das entstandene Produkt durch Verpressung in einer Form in die der Form entsprechenden Raumform überführt.

5. Verfahren nach Anspruch 2-4,
dadurch gekennzeichnet,
daß man das entstandene Produkt durch Anwendung von Bindemitteln in eine Raumform überführt.

6. Verfahren nach Anspruch 5,
dadurch gekennzeichnet,
daß man das entstandene Produkt durch die Anwendung von Polyvinylidenfluorid als Klebstoff in eine Raumform überführt.

7. Verfahren nach Anspruch 2-6,
dadurch gekennzeichnet,
daß man das entstandene Produkt in die Raumform einer Scheibe überführt.

8. Verfahren nach Anspruch 1,
dadurch gekennzeichnet,
daß es dadurch erhältlich ist, daß man Aktivkohle und ein Vinylpolymeres der allgemeinen Formel

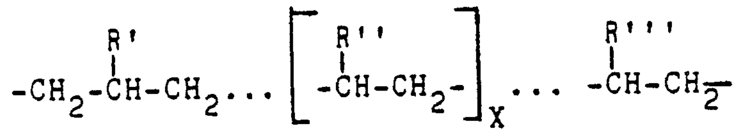

worin
$X = 1$ bis 100000
$R' =$ Halogen oder Estergruppe,
$R'' =$ Hydroxylgruppe,
$R''' =$ Äthergruppe,
wobei die Position der Substituenten $R'$, $R''$ und $R'''$ untereinander austauschbar sind, miteinander vereinigt.

9. Verfahren nach Anspruch 1 und 8,
dadurch gekennzeichnet,
daß man Aktivkohle und ein Vinylpolymeres der allgemeinen Formel

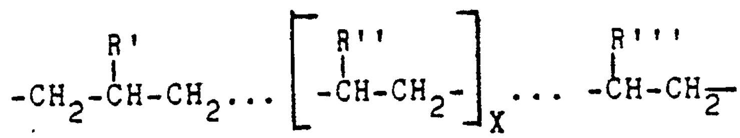

worin
$X = 1$ bis 100000
$R' =$ Halogen oder Estergruppe,
$R'' =$ Hydroxylgruppe,
$R''' =$ Äthergruppe,
wobei die Position der Substituenten $R'$, $R''$ und $R'''$ untereinander austauschbar sind, bei einem Druck von 2-2000 bar und einer Temperatur von 40°-300°C miteinander vereinigt.

10. Verfahren nach Anspruch 9,
dadurch gekennzeichnet,
daß die Umsetzung zwischen Aktivkohle und dem Vinylpolymeren durch Zugabe eines Katalysators beschleunigt wird.

11. Verfahren nach Anspruch 10,
dadurch gekennzeichnet,
daß man als Katalysatoren Elemente und/oder Verbindungen der Vanadingruppe und/oder der Platingruppe und/oder der Kupfergruppe des periodischen Systems einsetzt.

12. Verfahren nach Anspruch 1 bis 11,
dadurch gekennzeichnet,
daß das Verhältnis der beiden Stoffe Aktivkohle und Vinylpolymeres von 1-99 Gew.-% und von 99-1 Gew.-% reicht.

13. Anwendung der Elektroden nach Anspruch 1 bis 12 in elektrochemischen Zellen.

14. Anwendung nach Anspruch 13,
dadurch gekennzeichnet,
für den Einbau in stromerzeugenden und/oder stromspeichernden Zellen.

15. Anwendung nach Anspruch 13 bis 14,
wobei das Elektrodenmaterial im gemahlenen Zustand mit anderen leitenden Stoffen, wie Kohlefasern und/oder Ruß und/oder Graphit verbunden zum Einsatz gelangt.

16. Anwendung nach Anspruch 13 bis 15,
dadurch gekennzeichnet,
daß das organische Elektrodenmaterial mit anderen Kunstoffen gebunden und/oder gemischt zum Einsatz gelangt.

17. Anwendung nach Anspruch 13 bis 16,
dadurch gekennzeichnet,
daß das organische Elektrodenmaterial in mit Sauerstoff oxidiertem Zustand zum Einsatz gelangt.

18. Anwendung nach Anspruch 13 bis 17,
dadurch gekennzeichnet,
daß das organische Elektrodenmaterial in nach der Reduktion mit Wasserstoff erzeugtem Zustand zum Einsatz gelangt.

19. Anwendung nach Anspruch 13 bis 18,
dadurch gekennzeichnet,
daß das organische Elektrodenmaterial nach der Reduktion und Oxidation in einem wässrigen und/oder nicht wässrigen Elektrolyten zum Einsatz gelangt , wobei Reduktion und Oxidation gleichzeitig oder abwechselnd durchgeführt werden.

20. Anwendung nach Anspruch 13 bis 19,
dadurch gekennzeichnet,
daß das organische Elektrodenmaterial nach anodisch und/oder kathodisch erfolgter Oxidation und/oder Reduktion mit elektrischem Strom, angewendet wird, wobei bevorzugt Ströme zwischen 0, 1mA bis 100mA zum Einsatz gelangen.

21. Anwendung nach Anspruch 13-20 als raumförmliche Elektrode mit metallischen und/oder nichtmetallischen Ableitungen.

22. Anwendung nach Anspruch 21,
dadurch gekennzeichnet,
daß die raumförmlichen Elektroden Platten-oder Scheibengestalt aufweisen.

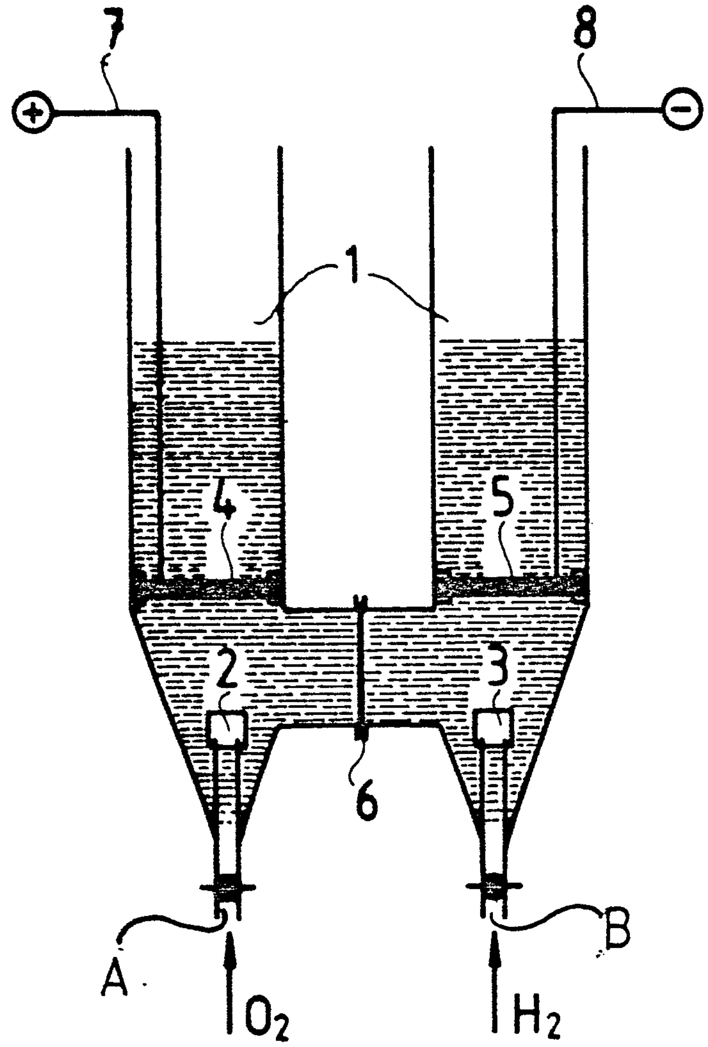


Fig.1

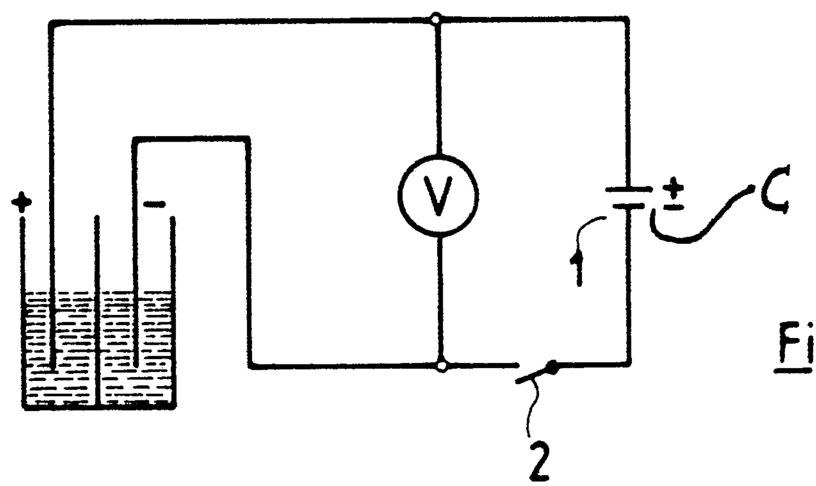


Fig.2

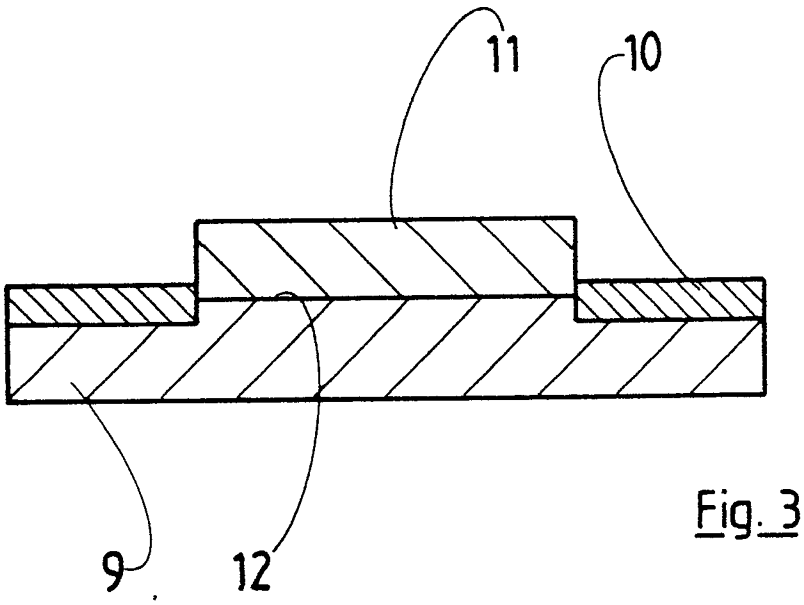


Fig. 3

Europäisches Patentamt

# EUROPÄISCHER RECHERCHENBERICHT

Nummer der Anmeldung

EP 89104835.7

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | GB - A - 1 328 611 (ZITO) * Ansprüche 1,2,4,5,7 * -- | 1-6, 12-16 | H 01 M 4/96<br>C 25 B 11/12 |
| D,A | DE - A1 - 3 618 881 (SCHUSTER) * Zusammenfassung * -- | 1 | |
| P,A | EP - A1 - 0 268 397 (ELECTRIC POWER) * Beispiel * ---- | 1 | |
| | | | **RECHERCHIERTE SACHGEBIETE (Int. Cl.4)** |
| | | | C 25 B<br>H 01 M |

Der vorliegende Recherchenbericht wurde für alle Patentansprüche erstellt.

| Recherchenort | Abschlußdatum der Recherche | Prüfer |
|---|---|---|
| WIEN | 22-06-1989 | LUX |

KATEGORIE DER GENANNTEN DOKUMENTEN

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82